# EUROPEAN PATENT SPECIFICATION

(11) **EP 4 138 184 B1**
(45) Date of publication and mention of the grant of the patent: **25.03.2026**
(21) Application number: 21808137.0
(22) Date of filing: 20.04.2021
(51) Int. Cl.: H01M 50/10

(54) **CELL ASSEMBLY, BATTERY, BATTERY PACK, AND VEHICLE**
ZELLENANORDNUNG, BATTERIE, BATTERIEPACK UND FAHRZEUG
ENSEMBLE D'ÉLÉMENTS, BATTERIE, BLOC-BATTERIE ET VÉHICULE

(30) Priority: 18.05.2020 CN 202010421322
(43) Date of publication of application: 22.02.2023
(73) Proprietor: BYD Company Limited, Shenzhen, Guangdong 518118 (CN)
(72) Inventor: HU, Shichao, Shenzhen, Guangdong 518118 (CN); ZHU, Yan, Shenzhen, Guangdong 518118 (CN); GAO, Xin, Shenzhen, Guangdong 518118 (CN)
(74) Representative: Dehns Germany Partnerschaft mbB
(86) International application number: PCT/CN2021/088457
(87) International publication number: WO 2021/233045

(56) References cited:
- EP-B1- 1 291 934
- CN-A- 108 448 041
- CN-A- 110 429 234
- CN-A- 110 518 156
- CN-A- 110 518 174
- CN-U- 212 587 691
- KR-A- 20200 047 402

## Description

### FIELD

The present invention relates to the field of batteries, and specifically to a battery core assembly, a battery, a battery pack, and a vehicle.

### BACKGROUND

With the continuous popularization of new energy vehicles, the requirements raised for use of power batteries in new energy vehicles are becoming increasingly higher. In particular, the users' requirements for the service life of power batteries becomes increasingly higher. Especially taxi, and buses are required to have a service life of more than 1 million kilometers over 5 years. For the sake of enhancing the capacity, multiple electrically connected battery cores are usually provided in existing batteries. The positive and negative terminals of the battery core are generally led out directly from both sides of the battery core, so the positive and negative terminals tend to wobble, adversely affecting the connection between the battery cores. For example, the battery cores may be easily disconnected, affecting the use of the battery.

EP 1 291 934 B1 relates to a highly reliable and durable battery and a process for fabrication thereof. KR 2020 0047402 A relates to a battery module having a structure of capable of preventing battery cell damage.

### SUMMARY

According to the present invention a battery core assembly, a battery, a battery pack and a vehicle are provided as set out in the independent claims; dependent claims relate to preferred embodiments.

The present invention is intended to resolve at least one of the technical problems existing in the related art.

To resolve the foregoing technical problem, the technical solutions of the present invention are as follows.

In a first aspect, the present invention provides a battery core assembly, which includes an encapsulation film and an electrode core assembly. The electrode core assembly is arranged in an accommodating cavity defined by the encapsulation film, and the electrode core assembly includes at least one electrode core.

The electrode core assembly is provided with two electrode lead-out members of opposite polarities for current output.

An intermediate ring is arranged in the accommodating cavity at a side of the electrode core assembly provided with the electrode lead-out member, and provided with an electrode lead-out hole for leading the electrode lead-out member out.

An electrolyte solution is injected in the accommodating cavity, and the intermediate ring is provided with at least one first liquid reservoir, where the first liquid reservoir is recessed from an outer surface of the intermediate ring to the interior of the intermediate ring; and the first liquid reservoir communicates with the accommodating cavity.

In some embodiments of the present invention, the intermediate ring and the encapsulation film are not hermetically connected, to allow the first liquid reservoir to communicate with the accommodating cavity.

In some embodiments of the present invention, multiple reinforcing ribs are provided in the first liquid reservoir, to divide the first liquid reservoir into multiple liquid storage units.

In some embodiments of the present invention, the length of the electrode core extends along a first direction, and the thickness of the electrode core extends along a second direction perpendicular to the first direction. Multiple first liquid reservoirs are provided, and the multiple first liquid reservoirs are arranged along the second direction.

In some embodiments of the present invention, the electrode core assembly includes an electrode core assembly body and the electrode lead-out members electrically connected to the electrode core assembly body. The length of the electrode core assembly body extends along the first direction.

The two electrode lead-out members are respectively led out from two opposite sides of the electrode core assembly body in the first direction. Two intermediate rings are provided, and the two intermediate rings are respectively arranged at two opposite sides of the electrode core assembly body in the first direction.

In some embodiments of the present invention, the length of the electrode core extends along a first direction, and the thickness of the electrode core extends along a second direction perpendicular to the first direction. The electrode core assembly body includes at least two electrode cores, arranged along the second direction, and connected in series or in parallel.

In some embodiments of the present invention, two adjacent electrode cores are connected in parallel. Each of the electrode cores includes an electrode core body and two tabs of opposite polarities that are electrically connected to the electrode core body. The two tabs are respectively arranged at two opposite sides of the electrode core body in the first direction, where the tabs with the same polarity of two adjacent electrode cores are located at the same side in the first direction, and the two adjacent tabs with the same polarity are electrically connected, to connect the two adjacent electrode cores in parallel.

In some embodiments of the present invention, the electrode core assembly body further includes a tab support positioned between two adjacent tabs with the same polarity, to which the two adjacent tabs with the same polarity are respectively electrically connected.

Each of the electrode lead-out members is electrically connected to one of the tab supports located at one side of the electrode core assembly body in the first direction.

In some embodiments of the present invention, the tab support is connected to the electrode lead-out member and the tab at positions that are respectively located on different surfaces of the tab support.

In some embodiments of the present invention, the tab support includes two opposite first surfaces, the two first surfaces face the adjacent two tabs with the same polarity, respectively, and the two adjacent tabs with the same polarity are respectively directly attached to the two first surfaces of the tab support.

In some embodiments of the present invention, at least one tab support connected with the electrode lead-out member is a square piece. The square piece includes the two first surfaces, a third surface located between the two first surfaces and facing the electrode core body, and a fourth surface opposite to the third surface.

The tab support electrically connected to the electrode lead-out member is connected to the electrode lead-out member through the fourth surface.

In some embodiments of the present invention, the interior of at least one tab support is a hollow cavity.

In some embodiments of the present invention, the hollow cavity is provided with an opening on at least one cavity wall, to communicate with the electrode lead-out hole on the intermediate ring at the same side, such that the hollow cavity is formed into a second liquid reservoir.

In some embodiments of the present invention, at least one tab support is a U-shaped piece, where the opening of the U-shaped piece is oriented parallel to the first direction. The U-shaped piece includes two opposite side walls and a bottom wall between the two opposite side walls, where the outer surfaces of the two opposite side walls are the two first surfaces respectively.

In some embodiments of the present invention, the opening of the U-shaped piece faces the electrode core body, and the tab support electrically connected to the electrode lead-out member is connected to the electrode lead-out member through the bottom wall.

In some embodiments of the present invention, the opening of the U-shaped piece faces the intermediate ring at the same side, and the tab support electrically connected to the electrode lead-out member is connected to the electrode lead-out member through one of the side walls.

In some embodiments of the present invention, the opening of the U-shaped piece communicates with the electrode lead-out hole on the intermediate ring at the same side, such that an inner cavity in the U-shaped piece is formed into a second liquid reservoir.

In some embodiments of the present invention, an insulating spacer is provided between the tab support and the electrode core body.

In some embodiments of the present invention, the two opposite ends of the electrode core body in the first direction are V-shaped end faces with a tip protruding outward. The two tabs of each of the electrode cores are respectively located at the tips of the two V-shaped end faces, and a V-shaped space is formed between the V-shaped end faces of two adjacent electrode core bodies at the same end in the first direction.

The insulating spacer is a V-shaped piece matching the shape of the V-shaped space, and the V-shaped piece is fitted in the V-shaped area.

In some embodiments of the present invention, the V angle of the V-shaped space is 90-150 degrees.

In some embodiments of the present invention, the insulating spacer is fixed to the tab support by snap fit.

In some embodiments of the present invention, the intermediate ring has an accommodating space at the side facing the electrode core assembly body. The two intermediate rings are respectively mounted around two opposite sides of the electrode core assembly body in the first direction, and the two opposite sides of the electrode core assembly body in the first direction are respectively fitted in the accommodating space of a corresponding intermediate ring.

In a second aspect, the present invention provides a battery, which includes a casing, and at least one battery core assembly encapsulated in the casing, which is any one of the battery core assemblies as described above.

In a third aspect, the present invention provides a battery module, which includes multiple batteries as described above.

In a fourth aspect, the present invention provides a battery pack, which includes multiple batteries or multiple battery modules as described above.

In a fifth aspect, the present invention provides a vehicle, which includes a battery module or a battery pack as described above.

Compared with the related art, beneficial effects of the present invention are as follows.

According to the battery core assembly provided in the present invention, an intermediate ring is arranged in the encapsulation film at a side of the electrode core assembly provided with the electrode lead-out member, and provided with an electrode lead-out hole for leading the electrode lead-out member out. The electrode lead-out member is extended out of the electrode lead-out hole, to fix the electrode lead-out member with the aid of the intermediate ring, so that the electrode lead-out member is unlikely to wobble or move and the connection is stable and reliable. Therefore, the service life of the battery core assembly can be extended.

### BRIEF DESCRIPTION OF THE DRAWINGS

Fig. 1 is a schematic structural view of a battery core assembly provided in a first embodiment of the present invention;
Fig. 2 is a front view of the battery core assembly shown in Fig. 1;
Fig. 3 is a schematic cross-sectional view of the battery core assembly shown in Fig. 2 along III-III;
Fig. 4 is a schematic structural view of the battery core assembly shown in Fig. 1, from which an encapsulation film is removed;
Fig. 5 is a schematic structural view of the battery core assembly shown in Fig. 4, from which an intermediate ring is removed;
Fig. 6 is a schematic exploded view of the battery core assembly provided in the first embodiment of the present invention;
Fig. 7 schematically shows the assembly of an insulating spacer, a tab support, and an electrode lead-out member provided in the first embodiment of the present invention;
Fig. 8 shows a disassembled structure of Fig. 7;
Fig. 9 is a schematic structural view of a tab support provided in another embodiment;
Fig. 10 is a schematic structural view of a battery core assembly provided in a second embodiment of the present invention;
Fig. 11 is a front view of the battery core assembly shown in Fig. 10;
Fig. 12 is a schematic cross-sectional view of the battery core assembly shown in Fig. 11 along XII-XII;
Fig. 13 is a schematic structural perspective view of an intermediate ring provided in the second embodiment of the present invention in one direction;
Fig. 14 is a left side view of the intermediate ring provided in the second embodiment of the present invention;
Fig. 15 is a schematic cross-sectional view of Fig. 14 along XV-XV;
Fig. 16 is a schematic structural perspective view of the intermediate ring provided in the second embodiment of the present invention in another direction;
Fig. 17 is a schematic structural view of a battery without a casing provided in an embodiment of the present invention;
Fig. 18 is a schematic structural view of a battery with a casing provided in an embodiment of the present invention;
Fig. 19 is a schematic structural view of a battery pack provided in an embodiment of the present invention; and
Fig. 20 is a schematic structural view of a vehicle provided in an embodiment of the present invention.

Reference numerals of the accompanying drawing:
10. battery core assembly; 11. encapsulation film; 110. accommodating cavity; 12. electrode core assembly; 121. electrode core; 1211. electrode core body; 1213. tab; 122. electrode lead-out member; 1221. contact portion; 1223. lead-out portion; 123. electrode core assembly body; 124. tab support; 1240. hollow cavity; 1241. first surface; 1243. third surface; 1244. fourth surface; 1248. bottom wall; 1245. opening; 1247. side wall; 125. insulating spacer; 1246. engaging hole; 1251. buckle; 13. intermediate ring; 130. opening; 131. electrode lead-out hole; 132. first liquid reservoir; 1321. reinforcing rib; 1322. liquid storage unit; 133. inner cavity; 134. accommodating space; 100. battery; 200. battery pack; 22. tray; 20. casing; 300. vehicle.

### DETAILED DESCRIPTION

Embodiments of the present invention are described in detail below, and examples of the embodiments are shown in accompanying drawings, where the same or similar elements or the elements having same or similar functions are denoted by the same or similar reference numerals throughout the description. The embodiments described below with reference to the accompanying drawings are exemplary, and are intended to explain the present invention and cannot be construed as a limitation on the present invention.

In the description of the present invention, it should be understood that, terms such as "length", "width", "up", "down", "front", "rear", "left", "right", "vertical", "horizontal", "top", "bottom", "inside", and "outside" indicate an orientation or position relationship based on the orientation or position shown in the accompanying drawings. These terms are merely for the convenience of describing the present invention and simplifying the description, and not to indicate or imply that the device or element referred to needs to have a particular orientation, be constructed and operated in a particular orientation, and therefore cannot be understood as a limitation on the present invention.

In addition, the terms "first" and "second" are used merely for the purpose of description, and shall not be construed as indicating or implying relative importance or implying a number of indicated technical features. Therefore, features defining "first" and "second" may explicitly or implicitly include one or more such features. In the description of the present invention, "number of", "multiple", or "plurality of" means two or more, unless otherwise specifically defined.

In the present invention, terms such as "installation", "connected", "connection", and "fastening" shall be understood in a broad sense unless otherwise expressly specified and defined, which for example, may be fixedly connected, detachably connected, or integrally formed; may be mechanically or electrically connected; may be directly connected or indirectly connected by an intermediate medium; or may be connection between two elements or interaction between two elements. For a person of ordinary skill in the art, specific meanings of the terms in the present invention may be understood based on a specific situation.

The present invention provides a battery core assembly 10, applied to a battery 100, and encapsulated in a casing 20 of the battery 100 as a battery core of the battery 100. At least one battery core assembly 10 is included. The battery core assembly 10 includes an encapsulation film 11 and an electrode core assembly 12. The electrode core assembly 12 is arranged in an accommodating cavity 110 defined by the encapsulation film 11, and the electrode core assembly 12 includes at least one electrode core 121.

The electrode core assembly 12 is provided with two electrode lead-out members 122 of opposite polarities for current output.

An intermediate ring 13 is further arranged in the accommodating cavity 110 at a side of the electrode core assembly 12 provided with the electrode lead-out member 122, and provided with an electrode lead-out hole 131 for leading the electrode lead-out member 122 out. The electrode lead-out hole 131 penetrates through the intermediate ring 13.

Compared with related art, the present invention has the following beneficial effects.

In the battery core assembly 10, the intermediate ring 13 is arranged in the encapsulation film 11 at a side of the electrode core assembly 12 provided with the electrode lead-out member 122, and provided with an electrode lead-out hole 131 for leading the electrode lead-out member 122 out. The electrode lead-out member 122 is extended out of the electrode lead-out hole 131, to fix the electrode lead-out member 122 with the aid of the intermediate ring 13, so that the electrode lead-out member 122 is unlikely to wobble or move and the connection is stable and reliable. Therefore, the service life of the battery core assembly 10 can be extended.

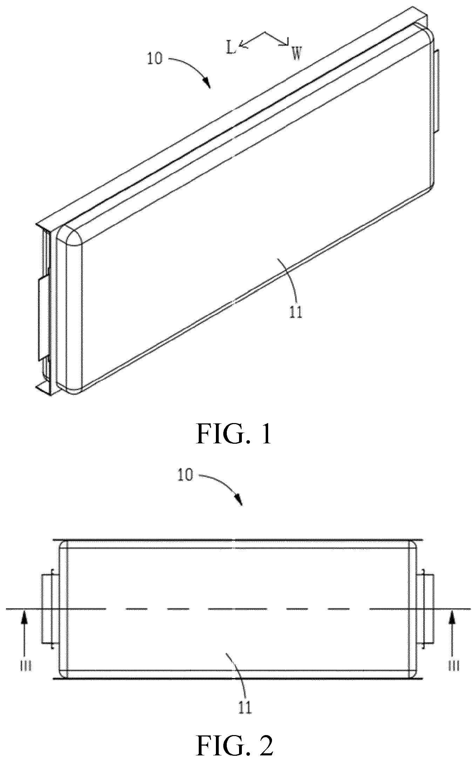

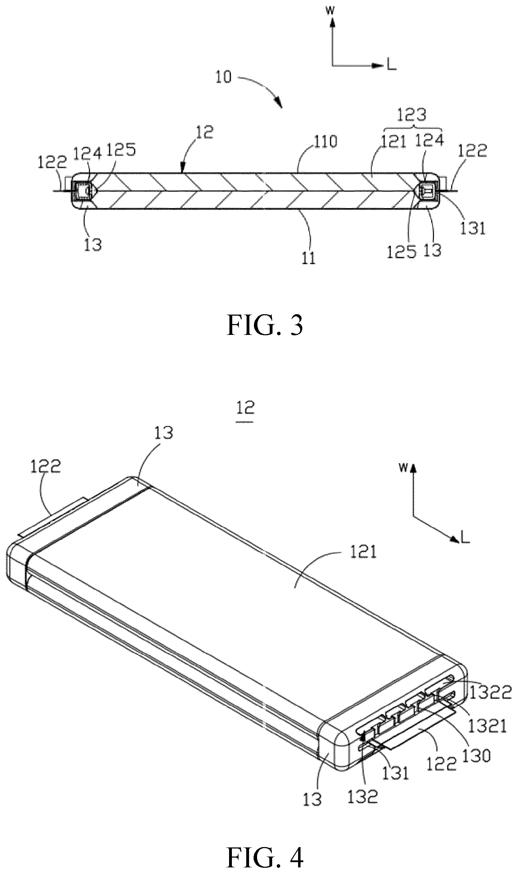

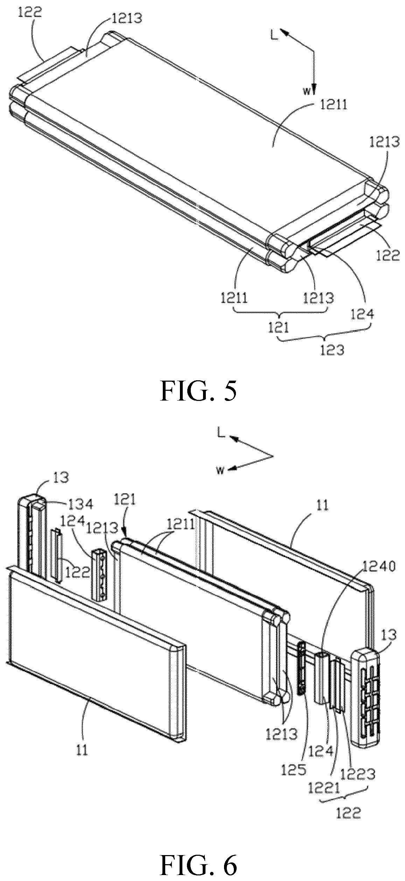

Fig. 1 is a schematic structural view of a battery core assembly 10 provided in a first embodiment of the present invention; Fig. 2 is a front view of the battery core assembly 10 shown in Fig. 1; and Fig. 3 is a schematic cross-sectional view of the battery core assembly 10 shown in Fig. 2 along III-III. Referring to Figs. 1, 2 and 3, the battery core assembly 10 includes an encapsulation film 11 and an electrode core assembly 12. The encapsulation film 11 defines an accommodating cavity 110, where the electrode core assembly 12 is arranged in the accommodating cavity 110, and the electrode core assembly 12 includes at least one electrode core 121. Fig. 4 is a schematic structural view of the battery core assembly 10 shown in Fig. 1, from which the encapsulation film 11 is removed, that is, a schematic structural view of the electrode core assembly 12; and Fig. 5 is a schematic structural view of the battery core assembly 10 shown in Fig. 4, from which an intermediate ring 13 is removed. Referring to Figs. 4 and 5, the electrode core assembly 12 is provided with two electrode lead-out members 122 of opposite polarities for current output, where one of the two electrode lead-out members 122 is a positive electrode lead-out member, and the other is a negative electrode lead-out member. An intermediate ring 13 is further arranged in the accommodating cavity 110 at a side of the electrode core assembly 12 provided with the electrode lead-out member 122, and provided with an electrode lead-out hole 131 for leading the electrode lead-out member 122 out.

Therefore, in the embodiment of present invention, the intermediate ring 13 is arranged in the encapsulation film 11 of the battery core assembly 10 at a side of the electrode core assembly 12 provided with the electrode lead-out member 122, and provided with an electrode lead-out hole 131 for leading the electrode lead-out member 122 out. The electrode lead-out member 122 is extended out of the electrode lead-out hole 131, to fix the electrode lead-out member 122 with the aid of the intermediate ring 13. This can prevent the wobbling of the electrode lead-out member 122 to a certain extent, thus improving the stability and reliability of the connection of the electrode lead-out member 122, and extending the service life of the battery core assembly 10.

In the present invention, an electrolyte solution is injected in the accommodating cavity 110. It can be understood that after injection into the accommodating cavity 110, the electrolyte solution is filled in a space between an inner surface of the encapsulation film 11 and an outer surface of the electrode core assembly 12. The intermediate ring 13 is provided with at least one first liquid reservoir 132, and the first liquid reservoir 132 is recessed from an outer surface of the intermediate ring 13 to the interior of the intermediate ring 13. The first liquid reservoir 132 communicates the accommodating cavity 110. As such, when an electrolyte solution is injected into the accommodating cavity 110, the electrolyte solution can enter the first liquid reservoir 132, to additionally store the electrolyte solution by using the first liquid reservoir 132.

The content of the electrolyte solution in the battery is an important factor affecting the service life of the battery. However, during the use of a battery, the electrolyte solution will gradually decrease due to expansion and other factors, affecting the service life of the battery. Moreover, lithium plating may also occur in some areas of the batteries, reducing the safety of the battery.

In the present invention, the intermediate ring 13 is provided with the first liquid reservoir 132. When an electrolyte solution is injected into the encapsulation film 11, the first liquid reservoir 132 can store an amount of the electrolyte solution, to reduce the possibility of withdrawing free electrolyte solution during an evacuation process when the encapsulation film 11 is evacuated in the formation of the battery core, and maximize the amount of the electrolyte solution stored. Further, during long-term use of the battery, the electrolyte solution in the battery core assembly 10 can be replenished in time, to reduce the occurrence of lithium plating in the battery, and improve the cycle life of the battery.

In some embodiments of the present invention, the intermediate ring 13 and the encapsulation film 11 are not hermetically connected, to allow the first liquid reservoir 132 to communicate with the accommodating cavity 110. In other words, the intermediate ring 13 is arranged in the encapsulation film 11, but an outer peripheral surface of the intermediate ring 13 and an inner surface of the encapsulation film 11 are not hermetically connected. Therefore, when an electrolyte solution is injected into the accommodating cavity 110 defined by the encapsulation film 11, the electrolyte solution can enter the first liquid reservoir 132, so the first liquid reservoir 132 can store an amount of the electrolyte solution.

In some embodiments of the present invention, multiple reinforcing ribs 1321 are provided in the first liquid reservoir 132, to divide the first liquid reservoir 132 into multiple liquid storage units 1322.

In some embodiments, three reinforcing ribs 1321 are provided. The three reinforcing ribs 1321 divide the first liquid reservoir 132 into four liquid storage units 1322. It can be understood that in other embodiments, the number of the reinforcing rib 1321 is not limited to 3, and may also be 1, 2, 4, or 5. The number of the liquid storage unit 1322 may be, but is not limited to, 4, and may also be less than 4 or more than 4.

Therefore, by arranging the reinforcing rib 1321 in the first liquid reservoir 132, the overall strength of the intermediate ring 13 can be enhanced, to enable the intermediate ring 13 to have a higher compressive strength.

Optionally, in some embodiments of the present invention, the width of the four liquid storage units 1322 may be the same, or different. Therefore, the width of each liquid storage unit 1322 can be adjusted according to the arrangement between the liquid storage units 1322, to make the overall arrangement more reasonable.

Optionally, in some embodiments of the present invention, to flow the electrolyte solution in each liquid storage unit 1322 to the accommodating cavity 110, each liquid storage unit 1322 is provided with an opening 130, which facilitates the flow of the electrolyte solution from the liquid storage unit 1322.

Optionally, in some embodiments of the present invention, the opening 130 brings the liquid storage unit 1322 and the electrode lead-out hole 131 into communication.

Therefore, the electrolyte solution in the liquid storage unit 1322 is allowed to easily flow out of the liquid storage unit 1322 and into the accommodating cavity 110.

In some embodiments of the present invention, the length of the electrode core 121 extends along a first direction L, and the thickness of the electrode core 121 extends along a second direction W perpendicular to the first direction L. Multiple first liquid reservoirs 132 are provided, and the multiple first liquid reservoirs 132 are arranged along the second direction W.

In the present invention, the first direction refers to the length direction of the electrode core 121 in Fig. 1, that is, the L direction shown in Fig. 1. The second direction refers to the thickness direction of the electrode core 121 in Fig. 1, that is, the W direction shown in Fig. 1.

In this embodiment, two first liquid reservoirs 132 are provided, and the two first liquid reservoirs 132 are arranged along the second direction W, symmetrically at two opposite sides of the electrode lead-out hole 131.

It can be understood that in some embodiments of the present invention, the number of the first liquid reservoir 132 may be three or more, which is not limited herein.

As a result, the space on the intermediate ring 13 is fully utilized. More first liquid reservoirs 132 are provided while the strength of the intermediate ring 13 is ensured, so more electrolyte solution can be stored, to reduce the occurrence of lithium plating in the battery, and improve the cycle life of the battery.

In some embodiments of the present invention, referring to Fig. 4, the electrode core assembly 12 includes an electrode core assembly body 123 and an electrode lead-out member 122 electrically connected to the electrode core assembly body 123. The length of the electrode core assembly body 123 extends along the first direction L. Two intermediate rings 13 are provided, and the two intermediate rings 13 are respectively arranged at two opposite sides of the electrode core assembly body 123 in the first direction L. The two electrode lead-out members 122 are respectively led out from two opposite sides of the electrode core assembly body 123 in the first direction L, and out of the electrode lead-out holes 131 of corresponding intermediate rings 13.

Therefore, when two intermediate rings 13 are provided, and the two intermediate rings 13 are respectively arranged at two opposite sides of the electrode core assembly body 123 in the first direction L, multiple first liquid reservoirs 132 provide multiple storage spaces. Moreover, the two intermediate rings 13 are symmetrically arranged, so the battery core assembly 10 has a symmetrical structure as a whole, and thus is stressed evenly, and has higher structural stability, and also better compression resistance and crash performance.

In some embodiments of the present invention, the intermediate ring 13 is mounted around the electrode core assembly body 123, that is, the two intermediate rings 13 are respectively mounted around two opposite sides of the electrode core assembly body 123 in the first direction L, as shown in Fig. 4. Fig. 6 is a schematic exploded view of the battery core assembly 10 provided in the first embodiment of the present invention. Referring to Fig. 6, the intermediate ring 13 has an accommodating space 134 at a side facing the electrode core assembly body 123. The two intermediate rings 13 are respectively mounted around two opposite sides of the electrode core assembly body 123 in the first direction L. The two opposite sides of the electrode core assembly body 123 in the first direction L are respectively fitted in the accommodating space 134 of a corresponding intermediate ring 13.

Therefore, the two intermediate rings 13 are respectively arranged at two opposite sides of the electrode core assembly body 123 in the first direction L, and respectively mounted around the two opposite sides of the electrode core assembly body 123 in first direction L, and the two opposite sides of the electrode core assembly body 123 in the first direction L are respectively fitted in the accommodating space 134 of a corresponding intermediate ring 13. The structural stability is much higher.

Optionally, in some embodiments of the present invention, one intermediate ring 13 is provided. Two electrode lead-out members 122 are extended out from one side of the electrode core assembly 12, and the intermediate ring 13 is arranged at the side of the electrode core assembly 12 provided with the electrode lead-out members 122. The intermediate ring 13 is provided with an electrode lead-out hole 131 for leading the two electrode lead-out members 122 out.

Therefore, on the premise of ensuring the compressive performance of the battery core assembly 10, the number of the intermediate ring 13 can be reduced, to save the material cost.

According to some embodiments of the present invention, referring to Fig. 3 again, in an embodiment of the present invention, the length of the electrode core 121 extends along a first direction L, and the thickness of the electrode core 121 extends along a second direction W perpendicular to the first direction L. The electrode core assembly body 123 includes at least two electrode cores 121, and the at least two electrode cores 121 are arranged along the second direction W, where the electrode cores 121 are connected in series or in parallel. As shown in Figs. 4-6, two electrode cores 121 connected in parallel are shown, where the two electrode cores 121 are arranged along the thickness direction of the electrode core 121, that is, the second direction W.

In some embodiments of the present invention, two adjacent electrode cores 121 are connected in parallel. Each of the electrode cores 121 includes an electrode core body 1211 and two tabs 1213 of opposite polarities that are electrically connected to the electrode core body 1211. The two tabs 1213 are respectively arranged at two opposite sides of the electrode core body 1211 in the first direction L. One of the two tabs 1213 of the electrode core 121 is a positive electrode tab, and the other is a negative electrode tab.

The tabs 1213 with the same polarity of two adjacent electrode cores 121 are located at the same side in the first direction L, and the two adjacent tabs 1213 with the same polarity are electrically connected, to connect the two adjacent electrode cores 121 in parallel. Further, the positive electrode tabs 1213 of two adjacent electrode cores 121 are located at the same side in the first direction L, and the negative electrode tabs 1213 are located at the other side in the first direction L. Therefore, the adjacent two tabs 1213 at the same side are electrically connected to connect two adjacent electrode cores 121 in parallel.

In the present invention, the electrode core 121 mentioned can be regarded as an electrode core commonly used in the field of power batteries, and the electrode core 121 and the electrode core assembly 12 are components inside the casing of a battery and cannot be understood as the battery itself. The electrode core 121 can be a wound electrode core 121, and the electrode core 121 generally refers to an assembly that is not fully sealed. Therefore, the battery mentioned in the present invention cannot be simply regarded as a battery module or battery assembly just because it includes multiple electrode cores 121. In the present invention, the electrode core assembly 12 may be composed of a single electrode core 121 or multiple electrode cores 121, where the multiple electrode cores 121 are connected in parallel, to form the electrode core assembly 12. For example, two electrode cores 121 are connected in parallel, to form the electrode core assembly 12; or four electrode cores 121 are connected in parallel, to form the electrode core assembly 12; or eight electrode cores 121 are connected in parallel, to form the electrode core assembly 12.

In some embodiments of the present invention, the electrode core assembly body 123 further includes a tab support 124 positioned between two adjacent tabs 1213 with the same polarity. where the two adjacent tabs with the same polarity 1213 are respectively electrically connected to the tab support 124, that is, the two adjacent tabs 1213 at the same side are electrically connected by the tab support 124. As shown in Fig. 3, a tab support 124 is provided at both sides of the electrode core assembly 12 in the length direction.

Each of the electrode lead-out members 122 of the electrode core assembly 12 is electrically connected to one of the tab supports 124 located at one side of the electrode core assembly body 123 in the first direction L. It can be understood that when the electrode core assembly 12 includes three, four or even more electrode cores 121, multiple tab supports 124 will be provided at each side of the electrode core assembly 12 in the length direction. In the embodiment of present invention, the positive electrode lead-out member 122 of the electrode core assembly 12 is located at the same side of the electrode core assembly 12 with the positive electrode tab 1213, and electrically connected to the positive electrode tab 1213; and the negative electrode lead-out member 122 is located at the other side of the electrode core assembly 12 with the negative electrode tab 1213, and electrically connected to the negative electrode tab 1213. According to some embodiments of the present invention, the electrode lead-out member 122 is electrically connected by one tab support 124 located the same side, so as to be electrically connected to a corresponding tab 1213.

For example, in the embodiment shown in Fig. 3 to Fig. 6, the electrode core assembly 12 includes two electrode cores 121. In this case, one tab support 124 is respectively provided at two opposite sides of the electrode core assembly 12 in the length direction L. The tab support 124 at each side is located between two tabs 1213 at the same side, and electrically connected to the two tabs 1213 at the same side.

It can be understood that in some embodiments of the present invention, when two or more tab supports 124 are provided at the same side of the electrode cores 121, since two adjacent tab supports 124 at the same side are spaced apart by the tab 1213, for the purpose of electrically connecting the two adjacent tab supports 124, the tab support 124 needs to be provided with a convex edge extending along the first direction L to beyond the edge of the tab 1213 to electrically connect the adjacent two tab supports 124 through contact of the convex edges.

In some embodiments of the present invention, referring to Figs. 5 to 8, the tab support 124 is connected to the electrode lead-out member 122 and the tab 1213 at positions that are respectively located on different surfaces of the tab support 124. Namely, the electrode lead-out member 122 and the tab 1213 that are electrically connected to the same tab support 124 are connected to the tab support 124 at positions respectively located on different surfaces of the tab support 124. Therefore, a situation is avoided where the electrode lead-out member 122 and the tab 1213 are both superimposed on the same surface of the tab support 124, to reduce the thickness at positions where the tab support 124 is connected to the electrode lead-out member 122 or the tab 1213.

In some embodiments of the present invention, the electrode lead-out member 122 includes a contact portion 1221 and a lead-out portion 1223 The contact portion 1221 is directly electrically connected to the tab support 124. The lead-out portion 1223 is drawn from the contact portion 1221 and extends along the first direction L. A part of the contact portion 1221 attached to the tab support 124 is plate-like, to increase the contact area between the contact portion 1221 and the tab support 124. As a result, the welded area between the tab support 124 and the contact portion 1221 is increased, to improve the connection reliability. In this embodiment, the lead-out portion 1223 is connected to one side of the contact portion 1221 in the first direction L to form an L-shaped bracket. It can be understood that in other embodiments, the lead-out portion 1223 is connected to a middle portion of the contact portion 1221 in the first direction L to form an L-shaped bracket. The contact portion 1221 of the electrode lead-out member 122 and the tab support 124 can be electrically connected by welding.

In some embodiments of the present invention, the tab support 124 includes two opposite first surfaces 1241, where the two first surfaces 1241 face two adjacent tabs 1213 with the same polarity respectively, and the two adjacent tabs 1213 with the same polarity are respectively directly attached to the two first surfaces 1241 of the tab support 124. The tab 1213 and the tab support 124 can be electrically connected by welding. By fixedly attaching the tab 1213 to the first surface 1241 of the tab support 124, the tab 1213 can be prevented from moving or shifting.

In some embodiments of the present invention, at least one tab support 124 connected to the electrode lead-out member 122 is a square piece, that is, the cross-section of the tab support 124 is of a square shape, and the tab support 124 has a cube structure on the whole. It can be understood that all the tab support 124 can be arranged as a square piece in the present invention. The arrangement of the tab support 124 as a square piece can provide a better support ability for the tabs 1213 between the adjacent tabs 1213, which can prevent the deformation of the tab support 124 during the welding process especially when the tab 1213 is welded to the tab support 124, and increase the compression resistance of the tab support 124.

In some embodiments of the present invention, the square piece includes the two first surfaces 1241, a third surface 1243 located between the two first surfaces 1241 and facing the electrode core body 1211, and a fourth surface 1244 opposite to the third surface 1243.

The tab support 124 electrically connected to the electrode lead-out member 122 is connected to the electrode lead-out member 122 through the fourth surface 1244. Specifically, the contact portion 1221 of the electrode lead-out member 122 is connected to the fourth surface 1244 of the tab support 124. Two adjacent tabs 1213 are respectively connected to the two first surfaces 1241. That is, the electrode lead-out member 122 and the tab 1213 are both in direct contact with and connected to the tab support 124 at positions located on different surfaces of the tab support 124. Therefore, a situation is avoided where the electrode lead-out member 122 and the tab 1213 are both superimposed on the same surface of the tab support 124, to reduce the thickness at positions where the tab support 124 is connected to the electrode lead-out member 122 and the tab 1213, and facilitate the connection between the electrode lead-out member 122 and the tab support 124.

In some embodiments of the present invention, the interior of at least one tab support 124 is a hollow cavity 1240. For example, the interior of all the tab supports 124 can be arranged to have a hollow cavity. The arrangement of the hollow tab support 124 can reduce the weight while ensuring the support strength.

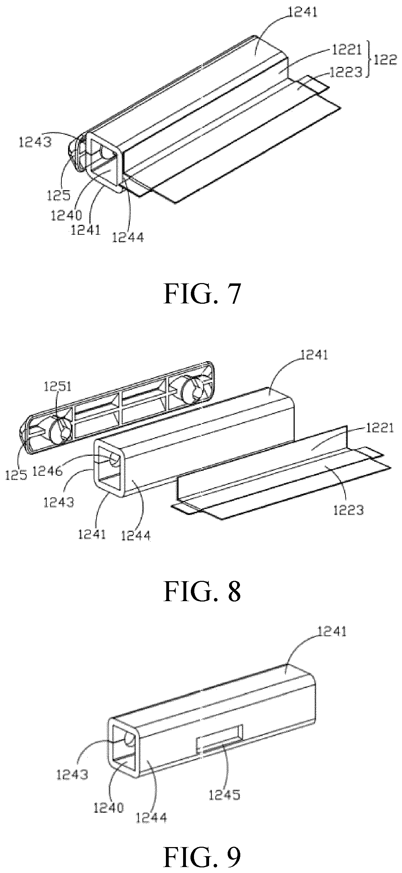

In some embodiments of the present invention, the hollow cavity 1240 is provided with an opening on at least one cavity wall. As shown in Figs. 7 and 8, the hollow cavity 1240 can be provided with an opening on two end faces, where the opening communicates with the electrode lead-out hole 131 on the intermediate ring 13 located at the same side with the tab support 124, such that the hollow cavity 1240 is formed into a second liquid reservoir. As shown in Fig. 6, the electrode core assembly 12 is provided with an intermediate ring 13 at two opposite sides in the first direction L. The two electrode lead-out member 122 of the electrode core assembly 12 are arranged at two opposite sides of the electrode core assembly 12 in the first direction L, and led out from the electrode lead-out holes 131 of intermediate rings 13 at respective sides. By bringing the tab support 124 into communication with the electrode lead-out hole 131 on the intermediate ring 13 at the same side, an electrolyte solution can enter via the electrode lead-out hole 131 into the hollow cavity 1240 communicating therewith, when the electrolyte solution is injected into the encapsulation film 11. Accordingly, the hollow cavity 1240 can be used to store the electrolyte solution, to attain a liquid storage function.

In some other embodiments, referring to Fig. 9, an opening 1245 may be provided on a cavity wall of the tab support 124 where the fourth surface 1244 is positioned, and the opening 1245 communicates with the electrode lead-out hole 131 on the intermediate ring 13 at the same side, such that the hollow cavity 1240 is formed into a second liquid reservoir. The arrangement of an opening communicating with the electrode lead-out hole 131 on a cavity wall where the fourth surface 1244 is positioned can further facilitate the flow of the electrolyte solution in and out of the hollow cavity 1240. Therefore, the liquid storage space is further increased by the second liquid reservoir.

In some embodiments of the present invention, referring to Figs. 3, 6, 7 and 8, an insulating spacer 125 is provided between the tab support 124 and the electrode core body 1211. The insulating spacer 125 functions to electrically isolate the electrode core 121 and the tab support 124.

In some embodiments of the present invention, referring to Fig. 3 again, the two opposite ends of electrode core body 1211 in the first direction L are V-shaped end faces with a tip protruding outward, the two tabs 1213 of each of the electrode cores 121 are respectively located at the tips of the two V-shaped end faces, and a V-shaped space is formed between the V-shaped end faces of the two adjacent electrode core bodies 1211 at the same end in the first direction L. The insulating spacer 125 is a V-shaped piece matching the shape of the V-shaped space. The V-shaped piece is fitted in the V-shaped area. That is, the outer surfaces of the V-shaped sides of the insulating spacer 125 are respectively attached to the two V-shaped end faces forming the V-shaped space, to isolate the electrode core body 1211 and the tab support 124, and support the V-shaped end faces of the electrode core body 1211, thereby protecting the electrode core assembly 12 against deformation due to collision.

In some embodiments of the present invention, the V angle of the V-shaped space is 90-150 degrees. According to some embodiments of the present invention, for example, the V angle may be in the range of 100-120 degrees, or 120-145 degrees; and may be 95 degrees, 110 degrees or 125 degrees in some embodiments, which is not limited herein.

Definitely, in some other embodiments, the two opposite ends of the electrode core body 1211 in the first direction L can also be straight, square, or arc-shaped. Correspondingly, the shape of the insulating spacer 125 also needs to be adaptively adjusted for adaptation, which is not limited herein.

In some embodiments of the present invention, the insulating spacer 125 is fixed to the tab support 124 by snap fit. In some embodiments, referring to Fig. 8, a buckle 1251 is provided on the insulating member 125, and an engaging hole 1246 is provided on the third surface 1243 of the tab support 124. The buckle 1251 is snapped into the engaging hole 1246 by extrusion deformation to form snap connection. Two buckles 1251 are provided, and two engaging holes 1246 are provided, where the two buckles 1251 are snapped into the two engaging holes 1246 to form snap connection. Therefore, firm connection is formed between the insulating member 125 and the tab support 124.

It should be noted that the insulating spacer 125 and the tab support 124 may only be in contact with each other without being fixed by a fastener, or they can be fixed in a manner of being pressed against each other through reasonable spatial arrangement. Furthermore, the insulating spacer 125 and the tab support 124 can also be glued together, or fixed together in other ways, which is not limited herein.

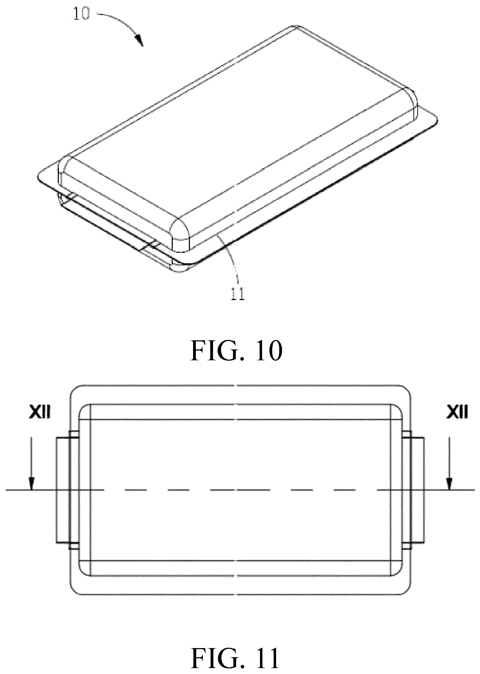

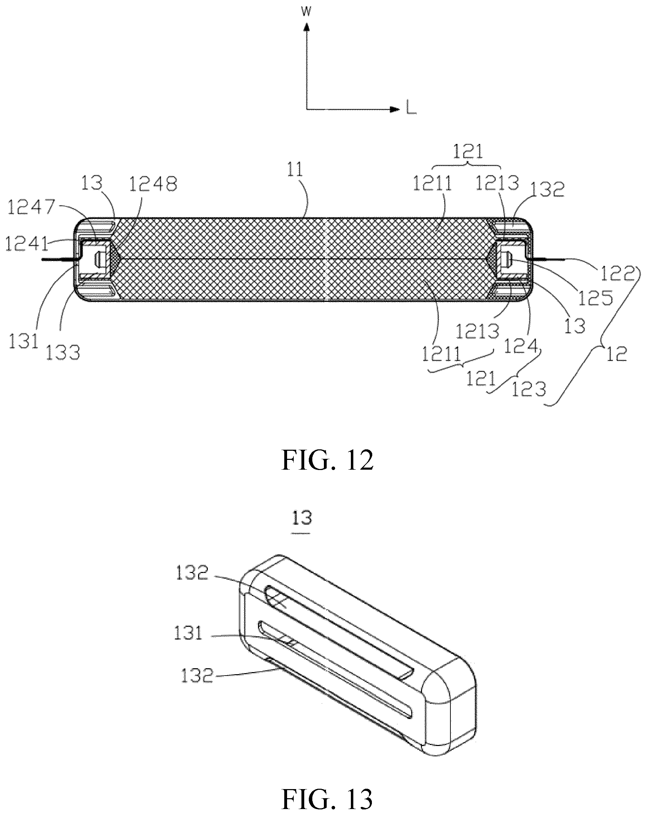

Referring to Figs. 10, 11 and 12, Fig. 10 is a schematic structural perspective view of a battery core assembly 10 provided in a second embodiment; Fig. 11 is a front view of the battery core assembly 10 provided in the second embodiment; and Fig. 12 is a schematic cross-sectional view of the battery core assembly 10 provided in the second embodiment along XII-XII. The second embodiment differs from the first embodiment in that the tab support 124 is a U-shaped piece, and the opening of the U-shaped piece is oriented parallel to the first direction L. The U-shaped piece includes two opposite side walls 1247 and a bottom wall 1248 between the two opposite side walls 1247, and the outer surfaces of the two opposite side walls 1247 are the two first surfaces 1241 respectively. Namely, adjacent two tabs 1213 are respectively attached to the outer surfaces of the two opposite side walls 1247.

As shown in Fig. 12, the opening of the U-shaped piece faces the intermediate ring 13 at the same side. That is, the opening of the U-shaped piece is arranged to face away from the electrode core body 1211, and the tab support 124 electrically connected to the electrode lead-out member 122 is connected to the electrode lead-out member 122 through one of the side walls 1247. In some embodiments, the portion of the electrode lead-out member 122 for electrical connection with the tab support 124 is located between one of the tabs 1213 and a corresponding side wall 1247. That is, the electrode lead-out member 122 and one tab 1213 are stacked on and welded to the outer surface of one of the side walls 1247.

The opening of the U-shaped piece communicates with the electrode lead-out hole 131 on the intermediate ring 13 at the same side, such that an inner cavity 133 in the U-shaped piece is formed into a second liquid reservoir. Therefore, an auxiliary space for storing the electrolyte solution is further increased.

In some embodiments of the present invention, the opening of the U-shaped piece faces the electrode core body 1211, and the tab support 124 electrically connected to the electrode lead-out member 122 is connected to the electrode lead-out member 122 through the bottom wall 1248.

In some embodiments of the present invention, an insulating spacer 125 is provided between the tab support 124 and the electrode core body 1211.

In some embodiments of the present invention, the two opposite ends of the electrode core body 1211 in the first direction L are V-shaped end faces with a tip protruding outward, the two tabs 1213 of each of the electrode cores are respectively located at the tips of the two V-shaped end faces, and a V-shaped space is formed between the V-shaped end faces of the two adjacent electrode core bodies 1211 at the same end in the first direction L. The insulating spacer 125 is a V-shaped piece matching the shape of the V-shaped space. The V-shaped piece is fitted in the V-shaped area.

In some embodiments of the present invention, the V angle of the V-shaped space is 90-150 degrees.

In some embodiments of the present invention, the two opposite ends of the electrode core body 1211 in the first direction L are straight, square, or arced. Correspondingly, the shape of the insulating spacer 125 also needs to be adaptively adjusted for adaptation, which is not limited herein.

In some embodiments of the present invention, the insulating spacer 125 is fixed to the tab support 124 by snap fit.

In some embodiments of the present invention, a buckle 1251 is provided on the insulating member 125, and an engaging hole 1246 is provided on the third surface 1243 of the tab support 124. The buckle 1251 is pressed into the engaging hole 1246 by extrusion deformation to form snap connection.

In this embodiment, two buckles 1251 are provided, and two engaging holes 1246 are provided, where the two buckles 1251 are snapped into the two engaging holes 1246 to form snap connection.

Therefore, firm connection is formed between the insulating member 125 and the tab support 124. In this way, the insulating member 125 electrically isolate the tab support 124 and the electrode core body 1211.

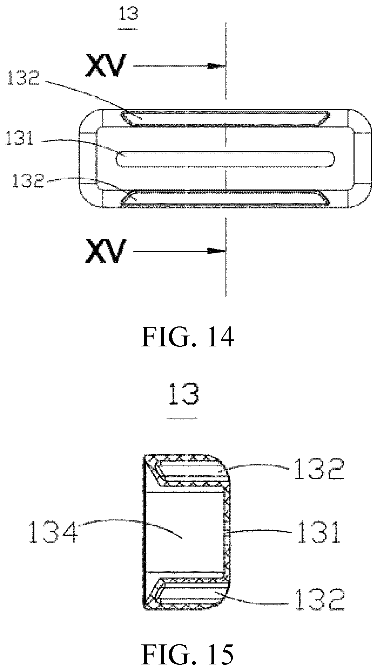

The second embodiment differs from the first embodiment in that no reinforcing ribs 1321 are arranged in the first liquid reservoir 132 as shown in Figs. 13, 14, 15 and 16. Namely, the first liquid reservoir 132 includes only one liquid storage unit 1322. Two first liquid reservoirs 132 are provided, and the two first liquid reservoirs 132 are arranged along the second direction W, symmetrically at two opposite sides of the electrode lead-out hole 131.

In some embodiments of the present invention, the number of the first liquid reservoir 132 may be three or more, which is not limited herein.

Therefore, the space on the intermediate ring 13 is fully utilized, such that the intermediate ring 13 can store more electrolyte solution, to reduce the occurrence of lithium plating in the battery, improve the cycle life of the battery, and simplify the structure of the intermediate ring 13.

Definitely, in some other embodiments, the opening of the U-shaped piece may also be oriented to face the electrode core body 1211. That is, the opening of the U-shaped piece is arranged adjacent to the electrode core body 1211, and the tab support 124 electrically connected to the electrode lead-out member 122 is connected to the electrode lead-out member 122 through the bottom wall 1248. In other words, the tab support 124 is connected to the electrode lead-out member 122 and the tab 1213 at positions that are respectively located on different surfaces of the tab support 124. This facilitates the electrical connection between the electrode lead-out member 122 and the tab support 124, and also reduces the thickness at positions of connection.

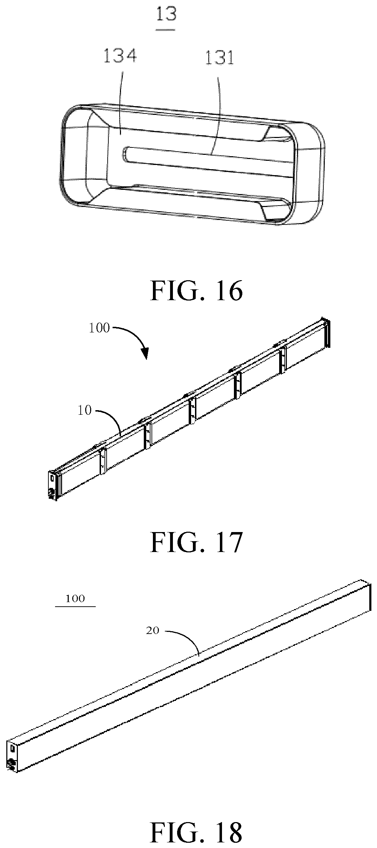

Referring to Figs. 17 and 18, in a battery embodiment provided in the present invention, the battery 100 includes a casing 20 and at least one battery core assembly 10 packaged in the casing 20. As shown in Fig. 17, multiple battery core assemblies 10 are encapsulated in the casing 20, and the multiple battery core assemblies 10 are arranged in sequence along a length direction of the battery 100. When the multiple battery core assemblies 10 are connected in series, the positive electrode lead-out member of one battery core assembly 10 of two battery core assemblies 10 is electrically connected to the negative electrode lead-out member of the other battery core assembly 10, to connect the two battery core assemblies 10 in series. The battery core assembly 10 is a battery core assembly 10 as described in any of the foregoing embodiments.

In some embodiments of the present invention, the casing 20 is a metal casing, for example, an aluminum casing. Definitely, it may be formed of other metals as required.

In some embodiments of the present invention, the battery 100 is roughly a cuboid, and the battery 100 has a length L, a thickness W and a height H, where the length L is greater than the height H, and the height H is greater than the thickness W. The length of the battery 100 is 400-2500 mm, and the length to height ratio of the battery 100 is 4-21.

It should be noted that the battery 100 being roughly a cuboid means that the battery 100 has a cuboid shape, a cube shape, a roughly cuboid shape or cube shape that is locally irregular, a generally approximate cuboid shape or cube shape that has locally a notch, a bump, a chamfer, an arc portion, or a curved portion.

The present invention further provides a battery module, which includes multiple batteries 100 provided in the present invention.

The present invention further provides a battery pack 200, which includes multiple batteries 100 provided in the present invention or multiple battery modules provided in the present invention.

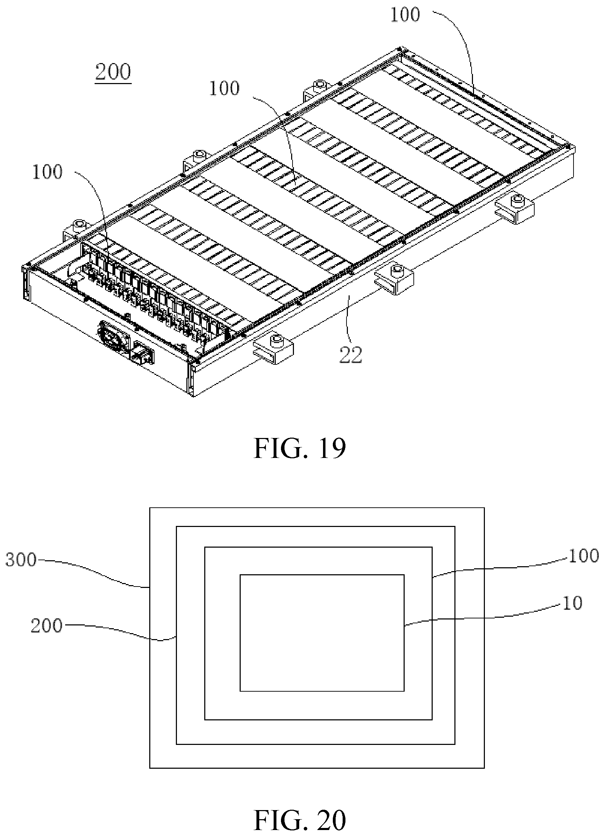

Referring to Fig. 19, the battery pack 200 provided in the present invention includes a tray 22 and the batteries 100 arranged on the tray 22.

The present invention further provides a vehicle 300 (see Fig. 20), which includes a battery module or a battery pack 200 provided in the present invention.

From the above, it can be seen that the present invention has excellent characteristics mentioned above, and has practical use due to the presence of performances that are not found in related art, making the product of the present invention become a product of great practical value.

The foregoing descriptions are merely examples of embodiments of the present invention, but are not intended to limit the present invention. Any modification, equivalent replacement, and improvement made without departing from the idea and principle of the present invention shall fall within the protection scope of the present invention.

## Claims

1. A battery core assembly (10), comprising an encapsulation film (11) and an electrode core assembly (12), wherein the electrode core assembly is arranged in an accommodating cavity (110) defined by the encapsulation film, and the electrode core assembly comprises at least one electrode core (121); and
the electrode core assembly (12) is provided with two electrode lead-out members (122) of opposite polarities for current output, and
an intermediate ring (13) is arranged in the accommodating cavity (110) at a side of the electrode core assembly (12) provided with the electrode lead-out member (122), and provided with an electrode lead-out hole (131) for leading the electrode lead-out member out,
wherein an electrolyte solution is injected in the accommodating cavity (110), and
**characterized in that** the intermediate ring (13) is provided with at least one first liquid reservoir (132), wherein the first liquid reservoir is recessed from an outer surface of the intermediate ring to the interior of the intermediate ring; and the first liquid reservoir (132) communicates with the accommodating cavity (110).

2. The battery core assembly according to claim 1, wherein the intermediate ring (13) and the encapsulation film (11) are not hermetically connected, to allow the first liquid reservoir to communicate with the accommodating cavity (10), or
wherein a plurality of reinforcing ribs (1321) are provided in the first liquid reservoir, to divide the first liquid reservoir into a plurality of liquid storage units (1322), or
wherein the length of the electrode core (121) extends along a first direction (L), the thickness of the electrode core extends along a second direction (W) perpendicular to the first direction, a plurality of first liquid reservoirs (132) are provided, and the plurality of first liquid reservoirs are arranged along the second direction.

3. The battery core assembly according to any one of claims 1 to 2, wherein the electrode core assembly comprises an electrode core assembly body (123) and the electrode lead-out members electrically connected to the electrode core assembly body (123), wherein the length of the electrode core assembly body (123) extends along the first direction, and
the two electrode lead-out members are respectively led out from two opposite sides of the electrode core assembly body (123) in the first direction; and two intermediate rings (13) are provided, and the two intermediate rings are respectively arranged at two opposite sides of the electrode core assembly body (123) in the first direction.

4. The battery core assembly according to claim 3, wherein the length of the electrode core extends along the first direction, the thickness of the electrode core extends along the second direction perpendicular to the first direction, and the electrode core assembly body (123) comprises at least two electrode cores (121), arranged along the second direction, and connected in series or in parallel, wherein preferably:
two adjacent electrode cores (121) are connected in parallel, and each of the electrode cores comprises an electrode core body (1211) and two tabs (1213) of opposite polarities that are electrically connected to the electrode core body (1211), wherein the two tabs (1213) are respectively arranged at two opposite sides of the electrode core body (1211) in the first direction, the tabs (1213) with the same polarity of two adjacent electrode cores are located at the same side in the first direction, and the two adjacent tabs with the same polarity are electrically connected, to connect the two adjacent electrode cores in parallel.

5. The battery core assembly according to claim 4, wherein the electrode core assembly body (123) further comprises a tab support (124) positioned between two adjacent tabs (1213) with the same polarity, to which the two adjacent tabs with the same polarity are respectively electrically connected; and
each of the electrode lead-out members (122) is electrically connected to one of the tab supports (124) located at one side of the electrode core assembly body (123) in the first direction, wherein preferably:
the tab support (124) is connected to the electrode lead-out member (122) and the tab at positions that are respectively located on different surfaces of the tab support.

6. The battery core assembly according to claim 5, wherein the tab support (124) comprises two opposite first surfaces (1241), the two first surfaces face the two adjacent tabs (1213) with the same polarity, respectively, and the two adjacent tabs (1213) with the same polarity are respectively directly attached to the two first surfaces of the tab support (124), wherein preferably:
at least one tab support (124) connected with the electrode lead-out member is a square piece, wherein the square piece comprises the two first surfaces, a third surface (1243) located between the two first surfaces and facing the electrode core body (1211), and a fourth surface (1244) opposite to the third surface; and
the tab support (124) electrically connected to the electrode lead-out member is connected to the electrode lead-out member through the fourth surface.

7. The battery core assembly according to claim 5, wherein the interior of at least one tab support (124) is a hollow cavity (1240), wherein preferably:
the hollow cavity (1240) is provided with an opening on at least one cavity wall, to communicate with the electrode lead-out hole (131) on the intermediate ring (13) at the same side, such that the hollow cavity (1240) is formed into a second liquid reservoir.

8. The battery core assembly according to claim 6, wherein at least one tab support (124) is a U-shaped piece, wherein the opening of the U-shaped piece is oriented parallel to the first direction, the U-shaped piece comprises two opposite side walls (1247) and a bottom wall (1248) between the two opposite side walls (1247), and the outer surfaces of the two opposite side walls (1247) are the two first surfaces (1241) respectively, wherein preferably:
the opening of the U-shaped piece faces the electrode core body (1211), and the tab support (124) electrically connected to the electrode lead-out member (122) through the bottom wall (1248), or preferably:
the opening of the U-shaped piece faces the intermediate ring (13) at the same side, and the tab support (124) electrically connected to the electrode lead-out member is connected to the electrode lead-out member through one of the side walls (1247), or preferably: the opening of the U-shaped piece communicates with the electrode lead-out hole (131) on the intermediate ring at the same side, such that an inner cavity (133) in the U-shaped piece is formed into a second liquid reservoir.

9. The battery core assembly according to any one of claims 5 to 8 , wherein an insulating spacer (125) is provided between the tab support (124) and the electrode core body (1211), wherein preferably the insulating spacer (125) is fixed to the tab support by snap fit.

10. The battery core assembly according to claim 9, wherein the two opposite ends of the electrode core body (1211) in the first direction are V-shaped end faces with a tip protruding outward, the two tabs (1213) of each of the electrode cores (121) are respectively located at the tips of the two V-shaped end faces, and a V-shaped space is formed between the V-shaped end faces of two adjacent electrode core bodies at the same end in the first direction; and
the insulating spacer (125) is a V-shaped piece matching the shape of the V-shaped space, and the V-shaped piece is fitted in the V-shaped area, wherein preferably the V angle of the V-shaped space is 90-150 degrees.

11. The battery core assembly according to any one of claims 3 to 10, wherein the intermediate ring (13) has an accommodating space (134) at the side facing the electrode core assembly body (123), the two intermediate rings are respectively mounted around two opposite sides of the electrode core assembly body (123) in the first direction, and the two opposite sides of the electrode core assembly body (123) in the first direction are respectively fitted in the accommodating space (134) of a corresponding intermediate ring.

12. A battery (100), comprising a casing (20), and at least one battery core assembly (10) encapsulated in the casing, wherein the battery core assembly is a battery core assembly according to any one of claims 1 to 11.

13. A battery pack (200), comprising a plurality of batteries according to claim 12.

14. A vehicle (300), comprising a battery according to claim 12 or a battery pack according to claim 13.

## Patentansprüche

1. Batteriekernbaugruppe (10), umfassend eine Kapselungs- bzw. Verkapselungsfolie (11) und eine Elektrodenkernbaugruppe (12), wobei die Elektrodenkernbaugruppe in einem von der Kapselungsfolie definierten Aufnahmehohlraum (110) angeordnet ist und die Elektrodenkernbaugruppe mindestens einen Elektrodenkern (121) umfasst; und
die Elektrodenkernbaugruppe (12) mit zwei Elektrodenausgangsstücken (122) entgegengesetzter Polarität für die Stromabgabe versehen ist, und
ein Zwischenring (13) in dem Aufnahmehohlraum (110) an einer Seite der Elektrodenkernanordnung (12) angeordnet ist, die mit dem Elektrodenausgangsstück (122) versehen ist, und mit einem Elektrodenausgangsloch (131) zum Herausführen des Elektrodenausgangsstücks versehen ist,
wobei eine Elektrolytlösung in dem Aufnahmehohlraum (110) injiziert wird, und
**dadurch gekennzeichnet, dass** der Zwischenring (13) mit mindestens einem ersten Flüssigkeitsreservoir (132) versehen ist, wobei das erste Flüssigkeitsreservoir von einer Außenfläche des Zwischenrings zum Inneren des Zwischenrings hin vertieft ist; und das erste Flüssigkeitsreservoir (132) mit dem Aufnahmehohlraum (110) in Verbindung steht .

2. Batteriekernbaugruppe gemäß Anspruch 1, wobei der Zwischenring (13) und die Verkapselungsfolie (11) nicht hermetisch verbunden sind, damit das erste Flüssigkeitsreservoir mit dem Aufnahmehohlraum (10) in Verbindung stehen kann, oder wobei eine Vielzahl von Verstärkungsrippen (1321) in dem ersten Flüssigkeitsreservoir vorgesehen ist, um das erste Flüssigkeitsreservoir in eine Vielzahl von Flüssigkeitsspeichereinheiten (1322) zu unterteilen, oder
wobei sich die Länge des Elektrodenkerns (121) entlang einer ersten Richtung (L) erstreckt, sich die Dicke des Elektrodenkerns entlang einer zweiten Richtung (W) senkrecht zur ersten Richtung erstreckt, mehrere erste Flüssigkeitsreservoirs (132) vorgesehen sind und die mehreren ersten Flüssigkeitsreservoirs entlang der zweiten Richtung angeordnet sind.

3. Batteriekernbaugruppe gemäß einem der Ansprüche 1 bis 2, wobei die Elektrodenkernbaugruppe einen Elektrodenkernbaugruppenkörper (123) und die mit dem Elektrodenkernbaugruppenkörper (123) elektrisch verbundenen Elektrodenausgangsstücke umfasst, wobei sich die Länge des Elektrodenkernbaugruppenkörpers (123) entlang der ersten Richtung erstreckt und
die beiden Elektrodenausgangsstücke jeweils von zwei gegenüberliegenden Seiten des Elektrodenkernbaugruppenkörpers (123) in der ersten Richtung herausgeführt sind; und zwei Zwischenringe (13) vorgesehen sind, wobei die beiden Zwischenringe jeweils an zwei gegenüberliegenden Seiten des Elektrodenkernbaugruppenkörpers (123) in der ersten Richtung angeordnet sind.

4. Batteriekernbaugruppe gemäß Anspruch 3, wobei sich die Länge des Elektrodenkerns entlang der ersten Richtung erstreckt, sich die Dicke des Elektrodenkerns entlang der zweiten Richtung senkrecht zur ersten Richtung erstreckt und der Elektrodenkernanordnungskörper (123) mindestens zwei Elektrodenkerne (121) umfasst, die entlang der zweiten Richtung angeordnet und in Reihe oder parallel geschaltet sind, wobei vorzugsweise:
zwei benachbarte Elektrodenkerne (121) parallel geschaltet sind, und jeder der Elektrodenkerne einen Elektrodenkernkörper (1211) und zwei Laschen (1213) mit entgegengesetzten Polaritäten umfasst, die elektrisch mit dem Elektrodenkernkörper (1211) verbunden sind, wobei die beiden Laschen (1213) jeweils an zwei gegenüberliegenden Seiten des Elektrodenträgerkörpers (1211) in der ersten Richtung angeordnet sind, die Laschen (1213) mit derselben Polarität zweier benachbarter Elektrodenträger in derselben Seite in der ersten Richtung angeordnet sind und die beiden benachbarten Laschen mit derselben Polarität elektrisch verbunden sind, um die beiden benachbarten Elektrodenträger parallel zu verbinden.

5. Batteriekernbaugruppe gemäß Anspruch 4, wobei der Elektrodenkernbaugruppenkörper (123) ferner eine Laschenhalterung (124) umfasst, die zwischen zwei benachbarten Laschen (1213) mit derselben Polarität positioniert ist, mit der die beiden benachbarten Laschen mit derselben Polarität jeweils elektrisch verbunden sind; und
jedes der Elektrodenausgangsglieder (122) elektrisch mit einem der Laschenhalterungen (124) verbunden ist, die sich auf einer Seite des Elektrodenkernbaugruppenkörpers (123) in der ersten Richtung befinden, wobei vorzugsweise:
die Laschenhalterung (124) mit dem Elektrodenausgangsstück (122) und der Lasche an Positionen verbunden ist, die sich jeweils auf unterschiedlichen Oberflächen der Laschenhalterung befinden.

6. Batteriekernbaugruppe gemäß Anspruch 5, wobei die Laschenhalterung (124) zwei gegenüberliegende erste Oberflächen (1241) umfasst, die beiden ersten Oberflächen jeweils den beiden benachbarten Laschen (1213) mit derselben Polarität zugewandt sind und die beiden benachbarten Laschen (1213) mit derselben Polarität jeweils direkt an den beiden ersten Oberflächen der Laschenhalterung (124) angebracht sind, wobei vorzugsweise:
mindestens ein mit dem Elektrodenausgangsglied verbundener Laschenhalter bzw. verbundene Laschenhalterung (124) ein quadratisches Stück ist, wobei das quadratische Stück die beiden ersten Oberflächen, eine dritte Oberfläche (1243), die sich zwischen den beiden ersten Oberflächen befindet und dem Elektrodenkernkörper (1211) zugewandt ist, und eine vierte Oberfläche (1244) gegenüber der dritten Oberfläche umfasst; und
der mit dem Elektrodenausgangsglied elektrisch verbundene Laschenhalter (124) über die vierte Fläche mit dem Elektrodenausgangsglied verbunden ist.

7. Batteriekernbaugruppe gemäß Anspruch 5, wobei das Innere mindestens einer Laschenhalterung (124) ein Hohlraum (1240) ist, wobei vorzugsweise:
der Hohlraum (1240) mit einer Öffnung an mindestens einer Hohlraumwand versehen ist, um mit dem Elektrodenausgangsloch (131) am Zwischenring (13) auf derselben Seite in Verbindung zu stehen, so dass der Hohlraum (1240) zu einem zweiten Flüssigkeitsreservoir ausgebildet ist.

8. Batteriekernbaugruppe gemäß Anspruch 6, wobei mindestens eine Laschenhalterung (124) ein U-förmiges Teil ist, wobei die Öffnung des U-förmigen Teils parallel zur ersten Richtung ausgerichtet ist, das U-förmige Teil zwei gegenüberliegende Seitenwände (1247) und eine Bodenwand (1248) zwischen den beiden gegenüberliegenden Seitenwänden (1247) umfasst und die Außenflächen der beiden gegenüberliegenden Seitenwände (1247) jeweils die beiden ersten Flächen (1241) sind, wobei vorzugsweise:
die Öffnung des U-förmigen Teils dem Elektrodenträgerkörper (1211) zugewandt ist und die Laschenhalterung (124) über die Bodenwand (1248) elektrisch mit dem Elektrodenausgangsglied (122) verbunden ist, oder vorzugsweise:
die Öffnung des U-förmigen Stücks zum Zwischenring (13) auf derselben Seite zeigt, und die Laschenhalterung (124), die elektrisch mit dem Elektrodenausgangsglied verbunden ist, über eine der Seitenwände (1247) mit dem Elektrodenausgangsglied verbunden ist, oder vorzugsweise: die Öffnung des U-förmigen Stücks mit dem Elektrodenausgangsloch (131) am Zwischenring auf derselben Seite in Verbindung steht, so dass ein innerer Hohlraum (133) in dem U-förmigen Stück zu einem zweiten Flüssigkeitsreservoir ausgebildet ist.

9. Batteriekernbaugruppe gemäß einem der Ansprüche 5 bis 8, wobei ein isolierender Abstandshalter (125) zwischen dem Laschenhalter (124) und dem Elektrodenkernkörper (1211) vorgesehen ist, wobei vorzugsweise der isolierende Abstandshalter (125) durch Einrasten am Laschenhalter befestigt ist.

10. Batteriekernbaugruppe gemäß Anspruch 9, wobei die beiden gegenüberliegenden Enden des Elektrodenkernkörpers (1211) in der ersten Richtung V-förmige Endflächen mit einer nach außen vorstehenden Spitze sind, die beiden Laschen (1213) jedes der Elektrodenkerne (121) jeweils an den Spitzen der beiden V-förmigen Endflächen angeordnet sind und zwischen den V-förmigen Endflächen zweier benachbarter Elektrodenkernkörper am gleichen Ende in der ersten Richtung ein V-förmiger Raum gebildet ist; und
der isolierende Abstandshalter (125) ein V-förmiges Teil ist, das der Form des V-förmigen Raums entspricht, und das V-förmige Teil in dem V-förmigen Bereich passt, wobei der V-Winkel des V-förmigen Raums vorzugsweise 90 bis 150 Grad beträgt.

11. Batteriekernbaugruppe gemäß einem der Ansprüche 3 bis 10, wobei der Zwischenring (13) einen Aufnahmehohlraum (134) an der dem Elektrodenkernbaugruppenkörper (123) zugewandten Seite aufweist, die beiden Zwischenringe jeweils um zwei gegenüberliegende Seiten des Elektrodenkernbaugruppenkörpers (123) in der ersten Richtung angebracht sind und die beiden gegenüberliegenden Seiten des Elektrodenkernbaugruppenkörpers (123) in der ersten Richtung jeweils in den Aufnahmehohlraum (134) eines entsprechenden Zwischenrings passen.

12. Batterie (100), bestehend aus einem Gehäuse (20) und mindestens einer in dem Gehäuse gekapselten Batteriekernbaugruppe (10), wobei die Batteriekernbaugruppe eine Batteriekernbaugruppe gemäß einem der Ansprüche 1 bis 11 ist.

13. Batteriepack (200), umfassend eine Vielzahl von Batterien gemäß Anspruch 12.

14. Fahrzeug (300), umfassend eine Batterie gemäß Anspruch 12 oder einen Batteriepack gemäß Anspruch 13.

## Revendications

1. Ensemble de noyau de batterie (10), comprenant un film d'encapsulation (11) et un ensemble de noyau d'électrode (12), dans lequel l'ensemble de noyau d'électrode est disposé dans une cavité de logement (110) définie par le film d'encapsulation, et l'ensemble de noyau d'électrode comprend au moins un noyau d'électrode (121) ; et
l'ensemble de noyau d'électrode (12) prévoit deux éléments de sortie d'électrode (122) de polarités opposées pour la sortie de courant, et
une bague intermédiaire (13) est disposée dans la cavité de logement (110) sur un côté de l'ensemble de noyau d'électrode (12) qui prévoit l'élément de sortie d'électrode (122), et qui est munie d'un trou de sortie d'électrode (131) pour faire sortir l'élément de sortie d'électrode,
dans lequel une solution électrolytique est injectée dans la cavité de logement (110), et
**caractérisé en ce que** la bague intermédiaire (13) prévoit au moins un premier réservoir de liquide (132), dans lequel le premier réservoir de liquide est en retrait par rapport à une surface extérieure de la bague intermédiaire vers l'intérieur de la bague intermédiaire ; et le premier réservoir de liquide (132) communique avec la cavité de logement (110) .

2. Ensemble de noyau de batterie selon la revendication 1, dans lequel la bague intermédiaire (13) et le film d'encapsulation (11) ne sont pas reliés hermétiquement, afin de permettre au premier réservoir de liquide de communiquer avec la cavité de logement (10), ou
dans lequel une pluralité de nervures de renfort (1321) sont prévues dans le premier réservoir de liquide, afin de diviser le premier réservoir de liquide en une pluralité d'unités de stockage de liquide (1322), ou
dans lequel la longueur du noyau d'électrode (121) s'étend le long d'une première direction (L), l'épaisseur d' e du noyau d'électrode s'étend le long d'une deuxième direction (W) perpendiculaire à la première direction, une pluralité de premiers réservoirs de liquide (132) sont prévus, et la pluralité de premiers réservoirs de liquide sont disposés le long de la deuxième direction.

3. Ensemble de noyau de batterie selon l'une quelconque des revendications 1 à 2, dans lequel l'ensemble de noyau d'électrode comprend un corps d'ensemble de noyau d'électrode (123) et les éléments de sortie d'électrode connectés électriquement au corps d'ensemble de noyau d'électrode (123), dans lequel la longueur du corps d'ensemble de noyau d'électrode (123) s'étend le long de la première direction, et
les deux éléments de sortie d'électrode sont respectivement sortis des deux côtés opposés du corps d'assemblage de noyau d'électrode (123) dans la première direction ; et deux anneaux intermédiaires (13) sont prévus, et les deux anneaux intermédiaires sont respectivement disposés aux deux côtés opposés du corps d'assemblage de noyau d'électrode (123) dans la première direction.

4. Ensemble de noyau de batterie selon la revendication 3, dans lequel la longueur du noyau d'électrode s'étend le long de la première direction, l'épaisseur du noyau d'électrode s'étend le long de la deuxième direction perpendiculaire à la première direction, et le corps d'assemblage de noyau d'électrode (123) comprend au moins deux noyaux d'électrode (121), disposés le long de la deuxième direction, et connectés en série ou en parallèle, dans lequel de préférence :
deux noyaux d'électrode adjacents (121) sont connectés en parallèle, et chacun des noyaux d'électrode comprend un corps de noyau d'électrode (1211) et deux languettes (1213) de polarités opposées qui sont connectées électriquement au corps de noyau d'électrode (1211), dans lequel les deux languettes (1213) sont respectivement disposées sur deux côtés opposés du corps de noyau d'électrode (1211) dans la première direction, les languettes (1213) de même polarité de deux noyaux d'électrode adjacents sont situées du même côté d' dans la première direction, et les deux languettes adjacentes de même polarité sont connectées électriquement, afin de connecter les deux noyaux d'électrode adjacents en parallèle.

5. Ensemble de noyau de batterie selon la revendication 4, dans lequel le corps d'assemblage de noyau d'électrode (123) comprend en outre un support de languette (124) positionné entre deux languettes adjacentes (1213) de même polarité, auquel les deux languettes adjacentes de même polarité sont respectivement connectées électriquement ; et
chacun des éléments de sortie d'électrode (122) est connecté électriquement à l'un des supports de languette (124) situés sur un côté du corps d'assemblage de noyau d'électrode (123) dans la première direction, dans lequel de préférence :
le support de languette (124) est connecté à l'élément de sortie d'électrode (122) et à la languette à des sites qui sont respectivement situés sur différentes surfaces du support de languette.

6. Ensemble de noyau de batterie selon la revendication 5, dans lequel le support de languette (124) comprend deux premières surfaces opposées (1241), les deux premières surfaces font face aux deux languettes adjacentes (1213) ayant la même polarité, respectivement, et les deux languettes adjacentes (1213) ayant la même polarité sont respectivement fixées directement aux deux premières surfaces du support de languette (124), dans lequel de préférence :
au moins un support de languette (124) relié à l'élément de sortie d'électrode est une pièce carrée, dans lequel la pièce carrée comprend les deux premières surfaces, une troisième surface (1243) située entre les deux premières surfaces et faisant face au corps de noyau d'électrode (1211), et une quatrième surface (1244) opposée à la troisième surface ; et
le support de languette (124) connecté électriquement à l'élément de sortie d'électrode est connecté à l' l'élément de sortie d'électrode par l'intermédiaire de la quatrième surface.

7. Ensemble de noyau de batterie selon la revendication 5, dans lequel l'intérieur d'au moins un support de languette (124) est une cavité creuse (1240), dans lequel de préférence :
la cavité creuse (1240) est prévue pour prévoir une ouverture sur au moins une paroi de la cavité, afin de communiquer avec le trou de sortie d'électrode (131) sur la bague intermédiaire (13) du même côté, de telle sorte que la cavité creuse (1240) forme un deuxième réservoir de liquide.

8. Ensemble de noyau de batterie selon la revendication 6, dans lequel au moins un support de languette (124) est une pièce en forme de U, dans lequel l'ouverture de la pièce en forme de U est orientée parallèlement à la première direction, la pièce en forme de U comprend deux parois latérales opposées (1247) et une paroi inférieure (1248) entre les deux parois latérales opposées (1247), et les surfaces extérieures des deux parois latérales opposées (1247) sont respectivement les deux premières surfaces (1241), dans lequel de préférence :
l'ouverture de la pièce en forme de U fait face au corps central de l'électrode (1211), et le support de languette (124) est connecté électriquement à l'élément de sortie d'électrode (122) par l'intermédiaire de la paroi inférieure (1248), ou de préférence :
l'ouverture de la pièce en forme de U fait face à l'anneau intermédiaire (13) du même côté, et le support de languette (124) connecté électriquement à l'élément de sortie d'électrode est connecté à l'élément de sortie d'électrode par l'intermédiaire de l'une des parois latérales (1247), ou de préférence : l'ouverture de la pièce en forme de U communique avec le trou de sortie d'électrode (131) sur la bague intermédiaire du même côté, de telle sorte qu'une cavité interne (133) dans la pièce en forme de U est formée en un deuxième réservoir de liquide.

9. Ensemble de noyau de batterie selon l'une quelconque des revendications 5 à 8, dans lequel une entretoise isolante (125) est prévue entre le support de languette (124) et le corps de noyau d'électrode (1211), dans lequel, de préférence, l'entretoise isolante (125) est fixée au support de languette par encliquetage.

10. Ensemble de noyau de batterie selon la revendication 9, dans lequel les deux extrémités opposées du corps de noyau d'électrode (1211) dans la première direction sont des faces d'extrémité en forme de V avec une pointe saillant vers l'extérieur, les deux languettes (1213) de chacun des noyaux d'électrode (121) sont respectivement situés aux extrémités des deux faces d'extrémité en forme de V, et un espace en forme de V est formé entre les faces d'extrémité en forme de V de deux corps de noyau d'électrode adjacents à la même extrémité dans la première direction ; et
l'entretoise isolante (125) est une pièce en forme de V mettant en correspondance la forme de l'espace en forme de V, et la pièce en forme de V est ajustée dans la zone en forme de V, dans lequel, de préférence, l'angle en V de l'espace en forme de V est compris entre 90 et 150 degrés.

11. Ensemble de noyau de batterie selon l'une quelconque des revendications 3 à 10, dans lequel la bague intermédiaire (13) comporte un espace de logement (134) sur le côté faisant face au corps d'ensemble de noyau d'électrode (123), les deux anneaux intermédiaires sont respectivement montés autour de deux côtés opposés du corps de l'ensemble de noyau d'électrode (123) dans la première direction, et les deux côtés opposés du corps de l'ensemble de noyau d'électrode (123) dans la première direction sont respectivement ajustés dans l'espace de logement (134) d'un anneau intermédiaire correspondant.

12. Batterie (100), comprenant un boîtier (20) et au moins un ensemble de noyau de batterie (10) encapsulé dans le boîtier, dans lequel l'ensemble de noyau de batterie est un ensemble de noyau de batterie selon l'une quelconque des revendications 1 à 11.

13. Bloc de batterie (200) comprenant une pluralité de batteries selon la revendication 12.

14. Véhicule (300) comprenant une batterie selon la revendication 12 ou un bloc de batterie selon la revendication 13.
